# EUROPÄISCHE PATENTSCHRIFT

(11) **EP 2 315 791 B1**
(45) Veröffentlichungstag und Bekanntmachung des Hinweises auf die Patenterteilung: **28.09.2016**
(21) Anmeldenummer: 09777257.8
(22) Anmeldetag: 17.07.2009
(51) Int. Cl.: C09D 133/06, C08F 220/18

(54) **ANIONISCHE WASSER- UND LÖSUNGMITTELLÖSLICHE ADDITIVE**
ANIONIC ADDITIVES SOLUBLE IN WATER AND IN SOLVENTS
ADDITIFS ANIONIQUES SOLUBLES DANS L'EAU ET LES SOLVANTS

(30) Priorität: 16.08.2008 DE 102008038071
(43) Veröffentlichungstag der Anmeldung: 04.05.2011
(73) Patentinhaber: CLARIANT INTERNATIONAL LTD, 4132 Muttenz (CH)
(72) Erfinder: FECHNER, Björn, 24647 Wasbek (DE); SCHAEFFER, Carsten, 84453 Mühldorf (DE); WÖRNDLE, Alexander, 60313 Frankfurt am Main (DE)
(74) Vertreter: Mikulecky, Klaus
(86) Internationale Anmeldenummer: PCT/EP2009/005199
(87) Internationale Veröffentlichungsnummer: WO 2010/020315

(56) Entgegenhaltungen:
- EP-A1- 1 323 789
- EP-A2- 0 264 841
- WO-A1-2006/038727

## Beschreibung

Gegenstand der vorliegenden Erfindung sind neuartige anionische Copolymere, die als Dispergiermittel für wasser- und lösemittelbasierende Pigmentpräparationen verwendet werden, und ein Verfahren zur Herstellung dieser Copolymere.

Für die Dispergierung von Pigmenten im flüssigen Medium sind üblicherweise Dispergiermittel notwendig. Diese Dispergiermittel, unterstützt durch geeignete Tenside, auch Benetzer genannt, fördern als oberflächenaktive Mittel die Benetzung der zu dispergierenden Pigmente und erleichtern das Aufbrechen von Agglomeraten und Aggregaten bei der Herstellung der Pigmentdispersion, welches in der Regel mit Hilfe einer Mahlung bewerkstelligt wird. Dispergiermittel können anionischer, kationischer, amphoterer oder neutraler Struktur sein. Sie können niedermolekularer Natur sein oder höhermolekulare Polymere darstellen, die eine statistische, alternierende, blockartige, kammartige oder sternförmig angeordnete Architektur der polymerisierten Monomere ausbilden. Von besonderer kommerzieller Bedeutung sind Dispergiermittel beispielsweise für die Dispergierung von Pigmenten bei der Herstellung von Pigmentkonzentraten, die zum Einfärben von Dispersions- und Lackfarben, Anstrichmitteln, Beschichtungsstoffen und Druckfarben verwendet werden, sowie zum Einfärben von Papier, Kartonagen und Textilien. Neuerdings sind Dispergiermittel und Additive gesucht, die nach einem Trocknungsprozess der flüssigen Dispersion eine schnelle Auflösung des trockenen Pulvers oder Granulates in dem Applikationsmedium sicherstellen. Hierzu können sich Kammpolymere eignen. Kammpolymere werden meist unter Verwendung von Makromonomeren auf Basis von Mono(meth)acrylsäureestern als Comonomere hergestellt und unterscheiden sich von anderen polymeren Dispergiermitteln dadurch, dass sie eine klar geordnete Struktur aufweisen, da Hydrophobie und Hydrophilie bzw. Polarität auf die Haupt- und die Seitenketten aufgeteilt werden kann.

In EP 1 293 523 wird ein Dispergiermittel beschrieben, welches ein Polymer ist, das ein gewichtsgemitteltes Molekülgewicht von etwa 5.000 bis 100.000 aufweist und 20 bis 80 Gew.-% eines hydrophilen Rückgrats und 80 bis 20 Gew.-% makromonomerer Seitenketten umfasst. Das Rückgrat besteht, bezogen auf das Gewicht des Rückgrats, zu 70 bis 98 Gew.-% aus polymerisierten ethylenisch ungesättigten Monomeren, die keine Carboxylgruppen enthalten, sowie zu 2 bis 30 Gew.-% aus polymerisierten ethylenisch ungesättigten Monomeren, die eine Carboxylgruppe tragen, wobei zumindest 10 % der Carboxylgruppen mit einem Amin oder einer anorganischen Base neutralisiert sind. Das Rückgrat weist im Vergleich zu den Seitenketten hydrophile Eigenschaften auf. Die Seitenketten bestehen aus Makromonomeren polymerisierter ethylenisch ungesättigter Monomere.

In EP 1 081 169 werden verzweigte Polymere beschrieben, die sich aus folgender Monomerenmischung ableiten:
(A) 50 bis 93 Gew.-% wenigstens eines ethylenisch ungesättigten Monomers,
(B) 2 bis 25 Gew.-% wenigstens eines ethylenisch ungesättigten Makromonomers ist einem Molekülgewicht von 1.000 bis 20.000, und
(C) 5 bis 25 Gew.-% wenigstens eines polymerisierbaren Imidazolderivats.

EP 1 562 696 beschreibt in wässriger Emulsionspolymerisation hergestellte polymere Dispergiermittel, welche mit Makromonomeren synthetisiert werden, die aus Polyalkylenglykol-Mono(meth)acrylaten bestehen. Die Hauptkette des Polymers muss ethylenisch ungesättigte Monomere mit mindestens einer Aminogruppe enthalten.

In DE 10 2005 019 384 werden Kammpolymere beschrieben, die aus ethylenisch ungesättigten Monomeren wie Alkyl(meth)acrylaten und Aryl(meth)acrylaten in Kombination mit einem reinen Polyethylenglykol-Mono(meth)acrylat synthetisiert werden, und als Dispergiermittel verwendet

WO 2006/038727 offenbart eine wässrige Dispersion zum Tintenstrahldrucken, enthaltend eine wässrige Dispersion von Teilchen eines Vinylpolymeren oder Polyesterbasierten Polymeren die einen Farbstoff und eine wasserunlösliche organische Verbindung enthält.

EP 1 323 789 beschreibt kammartige Polymere, die Polyalkylenoxid-Mono(meth)acrylat-Bausteine enthalten, jedoch nicht wasserlöslich sind. Ziel ist es, wässrige Tinten herzustellen. Analog dazu ist EP 1 491 598, enthaltend Polyalkylenoxid-Mono(meth)acrylat-Bausteine und salzbildene Monomere; die Polymere werden für wässrige Tinten verwendet.

Die angeführten Patente beschreiben den Stand der Technik, kammförmige oder blockbildende Polymere als Dispergiermittel bereitzustellen. Die durch die Trocknung resultierenden Pulver oder Granulate sind jedoch entweder nur im wässrigen oder nur im lösungsmittelhaltigen System leicht einrührbar. Keine bisher beschriebene Erfindung ist in der Lage, Dispergiermittel aufzuzeigen, die wässrige Pigmentdispersionen gut stabilisieren, wobei sich anschließend die Dispersionen gut trocknen lassen, beispielsweise durch eine Sprühtrocknung, und hierdurch ein Pulver oder Granulat ergeben, das in wässrige und in lösungsmittelhaltige Systeme leicht einrührbar ist, mit schneller und hoher Farbstärkeentwicklung. Der entscheidende Vorteil ist hier die universelle Dispergierbarkeit des Pulvers oder Granulates in wässrigen und lösungsmittelhaltigen Systemen.

Überraschenderweise wurde gefunden, dass spezielle anionische Kamm-Copolymere, die mit Hilfe von Makromonomeren aus Polyethylen/Polypropylenglykol-Mono(meth)acrylsäureestern hergestellt werden, die beschriebene Aufgabe, nämlich universelle Dispergierbarkeit erfüllen.

Gegenstand der Erfindung ist ein Verfahren zur Herstellung von Copolymeren, erhältlich durch Polymerisation der Monomere (A), (B), (C) und (D) unter Erhalt von nichtionischen Copolymeren, die reaktive terminale OH-Gruppen besitzen, und anschließende Umsetzung der terminalen OH-Gruppen zu anionischen Endgruppen, wie z. B. zu Schwefelsäuremonoester, wobei
(A) ein Monomer der Formel (I) 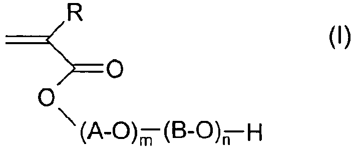 wobei
   A für C₂- bis C₄-Alkylen und
   B für ein von A unterschiedliches C₂- bis C₄-Alkylen steht,
   R für Wasserstoff oder Methyl steht,
   m eine Zahl von 1 bis 500, vorzugsweise 1 bis 50, ist;
   n eine Zahl von 1 bis 500, vorzugsweise 1 bis 50, ist, wobei die Summe m + n gleich 2 bis 1000 ist;
(B) ein Monomer der Formel (II) 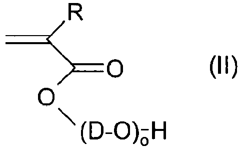 wobei
   D für C₃-Alkylen und
   R für Wasserstoff oder Methyl steht,
   o eine Zahl von 2 bis 500, vorzugsweise 2 bis 100, insbesondere 2 bis 50, besonders bevorzugt 5 bis 25, ist;
(C) ein ethylenisch ungesättigtes Monomer ist, das eine aromatische Gruppe enthält;
   und
(D) ein ethylenisch ungesättigtes Monomer ist, das einen Alkylrest enthält.

Das erfindungsgemäße Copolymer besitzt übliche endständige Gruppen, welche durch die Initiierung der radikalischen Polymerisation oder durch Kettenübertragungsreaktionen oder durch Kettenabbruchreaktionen entstehen, beispielsweise ein Proton, eine Gruppe aus einem Radikalinitiator oder eine schwefelhaltige Gruppe aus einem Kettenübertragungsreagenz.
Die anionischen Endgruppen können Sulfate, Carboxylate oder Phosphate sein.

Der molare Anteil der Monomere beträgt bevorzugt 0,1 bis 90 % für das Monomer (A), 0,1 bis 90 % für das Monomer (B), 0,1 bis 90 % für das Monomer (C) und 0,1 bis 90 % für das Monomer (D), wobei die Summe der molaren Anteile 100 % ergibt.
Besonders bevorzugt liegt der molare Anteil der Monomere bei 0,1 bis 70 % für Monomer (A), bei 10 bis 80 % für Monomer (B), bei 0,1 bis 50 % für Monomer (C) und bei 0,1 bis 50 % für das Monomer (D).

Die Alkylenoxideinheiten (A-O)ₘ und (B-O)ₙ des Monomeren (A) können entweder statistisch oder im Falle einer bevorzugten Ausführungsform blockartig angeordnet vorliegen.
In einer bevorzugten Ausführungsform steht (A-O)ₘ für Propylenoxid-Einheiten und (B-O)ₙ für Ethylenoxid-Einheiten, oder (A-O)ₘ für Ethylenoxid-Einheiten und (B-O)ₙ für Propylenoxid-Einheiten, wobei der molare Anteil der Ethylenoxid-Einheiten bevorzugt 50 bis 98 %, insbesondere 60 bis 95 %, besonders bevorzugt 70 bis 95 %, bezogen auf die Summe (100 %) der Ethylenoxid- und Propylenoxid-Einheiten, beträgt.
Die Summe der Alkylenoxideinheiten kann prinzipiell n + m = 2 bis 1000 sein, bevorzugt ist 2 bis 500, insbesondere 2 bis 100, besonders bevorzugt 5 bis 50.

Bevorzugte Monomere (C) lassen sich durch die Formel (IIIa) oder Formel (IIIb) beschreiben: 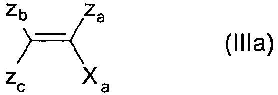 wobei
- Xₐ: für einen aromatischen oder araliphatischen Rest mit 3 bis 30 C-Atomen steht, der gegebenenfalls eines oder mehrere, z.B. 1, 2 oder 3, der Heteroatome N, O und S enthält,
- Zₐ: für H oder (C₁-C₄)-Alkyl steht,
- Z_{b}: für H oder (C₁-C₄)-Alkyl steht, und
- Z_{c}: für H oder (C₁-C₄)-Alkyl steht; 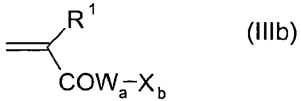
wobei
- R¹: für Wasserstoff oder Methyl steht,
- X_{b}: für einen aromatischen oder araliphatischen Rest mit 3 bis 30 C-Atomen steht, der gegebenenfalls eines oder mehrere, z.B. 1, 2 oder 3, der Heteroatome N, O und S enthält,
- Wₐ: für Sauerstoff oder die Gruppe NH steht.

Zu den Monomeren (C) gehören beispielsweise die folgenden Ester und Amide der Acrylsäure und Methacrylsäure: Phenyl, Benzyl, Tolyl, 2-Phenoxyethyl, Phenethyl.
Weitere Monomere (C) sind vinylaromatische Monomere wie Styrol und seine Derivate wie beispielsweise Vinyltoluol, alpha-Methylstyrol. Bei der aromatischen Einheit kann es sich auch um Heteroaromaten handeln, wie z. B. in 1-Vinylimidazol.
Besonders bevorzugte Monomere (C) können sein: Styrol, 1-Vinylimidazol, Benzylmethacrylat, 2-Phenoxyethylmethacrylat und Phenethylmethacrylat.

Bevorzugte Monomere (D) lassen sich durch die Formel (IV) beschreiben: 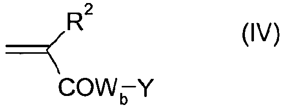 wobei
- R²: für Wasserstoff oder Methyl steht,
- Y: für einen aliphatischen Kohlenwasserstoffrest mit 1 bis 30 C-Atomen, vorzugsweise 6 bis 30, insbesondere 9 bis 20 C-Atomen, steht, der linear oder verzweigt, oder auch cyclisch sein kann, und die Heteroatome O, N und/oder S enthalten kann und auch ungesättigt sein kann,
- W_{b}: für Sauerstoff oder die Gruppe NH steht.
Zu den Monomeren (D) gehören beispielsweise die folgenden Ester und Amide der Acrylsäure und Methacrylsäure: Methyl-, Ethyl-, Propyl-, Isopropyl-, n-Butyl-, Isobutyl-, t-Butyl-, Pentyl-, Hexyl-, 2-Ethylhexyl-, 3,3-Dimethylbutyl-, Heptyl-, Octyl-, Isooctyl-, Nonyl-, Lauryl-, Cetyl-, Stearyl-, Behenyl-, Cyclohexyl-, Trimethylcyclohexyl-, t-Butylcyclohexyl-, Bornyl-, Isobornyl-, Adamantyl-, (2,2-Dimethyl-1-methyl)propyl-, Cyclopentyl-, 4-Ethyl-cyclohexyl-, 2-Ethoxyethyl-, Tetrahydrofurfuryl- und Tetrahydropyranyl.

Bevorzugte Monomere (D) sind die folgenden Alkyl-Ester bzw. Alkyl-Amide der Acrylsäure und Methacrylsäure: Methyl-, Ethyl-, Propyl-, Butyl-, Isobutyl-, 2-Ethoxyethyl-, Myristyl-, Octadecyl- und besonders bevorzugt 2-Ethylhexyl- und Lauryl-.

Die Copolymere besitzen ein Molekulargewicht von 10³ g/mol bis 10⁹ g/mol, besonders bevorzugt von 10³ bis 10⁷ g/mol, insbesondere bevorzugt 10³ bis 10⁵ g/mol.

Die Herstellung der Copolymere kann mittels radikalischer Polymerisation erfolgen. Die Polymerisationsreaktion kann kontinuierlich, diskontinuierlich oder semi-kontinuierlich durchgeführt werden.

Die Polymerisationsreaktion wird vorteilhafterweise als Fällungspolymerisation, Emulsionspolymerisation, Lösungspolymerisation, Substanzpolymerisation oder Gelpolymerisation geführt. Besonders vorteilhaft für das Eigenschaftsprofil der erfindungsgemäßen Copolymere ist die Lösungspolymerisation.

Als Lösungsmittel für die Polymerisationsreaktion können alle organischen oder anorganischen Lösungsmittel dienen, die sich bezüglich radikalischer Polymerisationsreaktionen weitestgehend inert verhalten, beispielsweise Ethylacetat, n-Butylacetat oder 1-Methoxy-2-propylacetat, sowie Alkohole wie z. B. Ethanol, i-Propanol, n-Butanol, 2-Ethylhexanol oder 1-Methoxy-2-propanol, ebenfalls Diole wie Ethylenglykol und Propylenglykol. Auch können Ketone wie Aceton, Butanon, Pentanon, Hexanon und Methylethylketon, Alkylester der Essig-, Propion- und Buttersäure wie beispielsweise Ethylacetat, Butylacetat und Amylacetat, Ether wie Tetrahydrofuran, Diethylether und Ethylenglykol- und Polyethylenglykol-monoalkylether und -dialkylether verwendet werden. Ebenso können aromatische Lösungsmittel wie z. B. Toluol, Xylol oder höher siedende Alkylbenzole eingesetzt werden. Ebenfalls ist der Einsatz von Lösungsmittelgemischen möglich, wobei sich die Wahl des Lösungsmittels oder der Lösungsmittel nach dem Einsatzzweck des erfindungsgemäßen Copolymeren richtet. Bevorzugt Verwendung finden Wasser; niedere Alkohole; bevorzugt Methanol, Ethanol, Propanole, iso-, sec.- und t-Butanol, 2-Ethylhexanol, Butylglykol und Butyldiglykol, insbesondere bevorzugt iso-Propanol, t-Butanol, 2-Ethylhexanol, Butylglykol und Butyldiglykol; Kohlenwasserstoffe mit 5 bis 30 Kohlenstoffatomen und Mischungen und Emulsionen der vorgenannten Verbindungen.

Die Polymerisationsreaktion erfolgt bevorzugt im Temperaturbereich zwischen 0 und 180 °C, besonders bevorzugt zwischen 10 und 100 °C, sowohl bei Normaldruck als auch unter erhöhtem oder erniedrigtem Druck. Gegebenenfalls kann die Polymerisation auch unter einer Schutzgasatmosphäre, vorzugsweise unter Stickstoff, ausgeführt werden.

Zur Auslösung der Polymerisation können energiereiche, elektromagnetische Strahlen, mechanische Energie oder die üblichen, chemischen Polymerisationsinitiatoren wie organische Peroxide, z. B. Benzoylperoxid, tert.-Butylhydroperoxid, Methylethylketon-peroxid, Cumoylperoxid, Dilauroylperoxid (DLP) oder Azoinitiatoren, wie z. B. Azodiisobutyronitril (AIBN), Azobisamidopropyl-hydrochlorid (ABAH) und 2,2'-Azobis(2-methylbutyronitril) (AMBN) verwendet werden. Ebenfalls geeignet sind anorganische Peroxyverbindungen, wie z. B. (NH₄)₂S₂O₈, K₂S₂O₈ oder H₂O₂, gegebenenfalls in Kombination mit Reduktionsmitteln (z. B. Natriumhydrogensulfit, Ascorbinsäure, Eisen(II)sulfat) oder Redoxsystemen, welche als reduzierende Komponente eine aliphatische oder aromatische Sulfonsäure (z. B. Benzolsulfonsäure, Toluolsulfonsäure) enthalten.

Als Molekulargewichtsregler kommen die üblichen Verbindungen zum Einsatz. Geeignete bekannte Regler sind z. B. Alkohole, wie Methanol, Ethanol, Propanol, Isopropanol, n-Butanol, sec.-Butanol und Amylalkohole, Aldehyde, Ketone, Alkylthiole, wie z. B. Dodecylthiol und tert.-Dodecylthiol, Thioglykolsäure, Isooctylthioglykolat und einige Halogenverbindungen, wie z. B. Tetrachlorkohlenstoff, Chloroform und Methylenchlorid.

Im Anschluss an die Polymerisation wird das Lösungsmittel entfernt.
Das so erhaltene nichtionische Polymer besitzt nun an den Polyoxyalkylen-Seitenketten reaktive Hydroxy-Funktionen, die im folgenden Schritt zu anionischen Funktionalitäten umgesetzt werden. Anionische Funktionalitäten sind beispielsweise SO₃M, CH₂COOM, PO₃M₂ oder Sulfosuccinat. M hat dabei die nachstehend definierte Bedeutung.

Ein weiterer Gegenstand der Erfindung sind Copolymere, gekennzeichnet durch die Formeln (V) oder (VI): 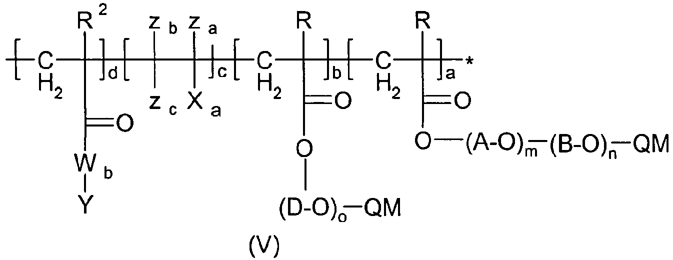 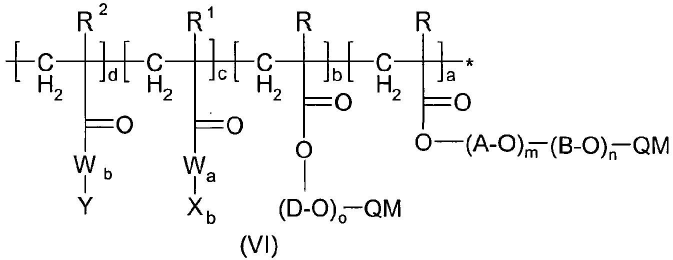 wobei A für C2 - bis C4 -Alkylen, B für ein von A unterschiedliches C2 - bis C4 -Alkylen, D für C3 -Alkylen steht, m eine Zahl von 1 bis 500 ist; n eine Zahl von 1 bis 500 ist, wobei die Summe m + n gleich 2 bis 1000 ist, o eine Zahl von 2 bis 500 ist; Xa für einen aromatischen oder araliphatischen Rest mit 3 bis 30 C-Atomen steht, der gegebenenfalls Heteroatome aus der Gruppe N, 0 und S enthält, Za für H oder (C1 -C4 )-Alkyl steht, Zb für H oder (C1 -C4 )-Alkyl steht, Zc für H oder (C1 -C4 )-Alkyl steht, R für Wasserstoff oder Methyl steht, R¹ für Wasserstoff oder Methyl steht, R2 für Wasserstoff oder Methyl steht, Y für einen aliphatischen Kohlenwasserstoffrest mit 1 bis 30 C-Atomen steht, der linear oder verzweigt, oder auch cyclisch sein kann, und Heteroatome aus der Gruppe O, N und S enthalten kann, sowie ungesättigt sein kann, Wb für Sauerstoff oder die Gruppe NH steht; Xb für einen aromatischen oder araliphatischen Rest mit 3 bis 30 C-Atomen steht, der gegebenenfalls Heteroatome aus der Gruppe 0, N und S enthält, Wa für Sauerstoff oder die Gruppe NH steht, Q die Bedeutung S03, CH2 C00, P03 M oder Sulfosuccinat hat, und M die Bedeutung H, ein Metallkation, ein Ammonium, ein alkyliertes Ammoniumion, oder eine Kombination davon hat.

Die Indices a, b, c und d geben den molaren Anteil des jeweiligen Monomeren (A), (B), (C) und (D) an, und zwar:
a = 0,001 - 0,9; b = 0,001 - 0,9; c = 0,001 - 0,9; d = 0,001 - 0,9; bevorzugt a = 0,001 - 0,7; b = 0,01 - 0,8; c = 0,001 - 0,5; d = 0,001 - 0,5; wobei die Summe a + b + c + d gleich 1 ist.
Die übrigen Variablen sind wie in Formel (I), (II), (IIIa) und (IIIb) definiert.

In Formel (V) und (VI) steht Q für SO₃, CH₂COO, PO₃M; oder QM bedeutet 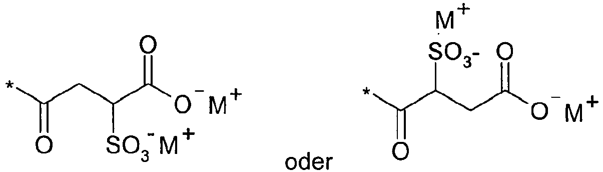 und M steht für H, ein Metallkation, oder für ein Ammonium, z.B. Na, K, Ca, NH₄⁺, ein alkyliertes Ammoniumion, oder eine Kombination davon (der Stern * gibt in der Markush-Formel an, dass an dieser Stelle eine Verknüpfung zum Polymer besteht).

Im Fall der Sulfosuccinate werden die nichtionischen Copolymere beispielsweise zunächst mit Maleinsäureanhydrid verestert. Hierbei kann ohne Lösungsmittel gearbeitet werden, die Reaktion kann in der Polymerschmelze unter erhöhter Temperatur durchgeführt werden. Anschließend wird der erhaltene Maleinsäuremonoester sulfoniert. Hierzu wird dieser beispielsweise in einer wässrigen Lösung mit Natriumsulfit oder Natriumpyrosulfit umgesetzt. Als Produkt erhält man die wässrige Lösung des Sulfosuccinat-Natriumsalzes.

Die Sulfatester werden beispielsweise durch Umsetzung der nichtionischen Copolymere mit Amidosulfonsäure hergestellt. Diese Umsetzung erfolgt in einer Schmelze des nichtionischen Copolymers unter Zugabe von Amidosulfonsäure. Hierbei werden die OH-Gruppen des Copolymers in Sulfatester umgewandelt, die dann als Ammoniumsalz vorliegen.
Durch Carboxymethylierung, beispielsweise mit Natriumchloracetat, können die terminalen Hydroxyfunktionen in die entsprechenden Polyethercarboxylate überführt werden.

Die Phosphorsäureester können beispielsweise durch die Umsetzung einer Schmelze des nichtionischen Copolymers mit Polyphosphorsäure oder Phosphorpentoxid erhalten werden. Bei dieser Reaktion können sowohl Phosphorsäuremonoester als auch -diester und -triester erhalten werden.

Da die Umsetzung des nichtionischen Polymers zu anionischen Funktionalitäten meist nicht quantitativ erfolgt, entsteht meist ein Gemisch aus umgesetztem (QM = SO₃M, CH₂COOM, PO₃M₂, Sulfosuccinat) und nicht umgesetztem (QM = H) Polymer. Dieses Gemisch ist praktisch nicht trennbar und kann als solches für die Zwecke der vorliegenden Erfindung eingesetzt werden.

Ein weiterer Gegenstand der vorliegenden Erfindung ist die Verwendung des erfindungsgemäßen anionischen Copolymers als Dispergiermittel, insbesondere für Pigmente und Füllstoffe, z. B. bei der Herstellung von wasser- oder lösungsmittel-basierenden Pigmentkonzentraten, die zum Einfärben von Dispersions- und Lackfarben, Anstrichmitteln, Beschichtungsstoffen und Druckfarben verwendet werden, sowie zum Einfärben oder Bedrucken von Papier, Kartonagen und Textilien.

### Synthesevorschrift 1:

### Allgemeine Polymerisationsvorschrift:

In einem Kolben mit Rührer, Rückflusskühler, Innenthermometer und Stickstoffeinleitung werden das Monomer A, Monomer B, Monomer C, Monomer D und der Molekulargewichtsregler in Lösungsmittel unter Stickstoffeinleitung in den in nachfolgenden Tabellen angegebenen Gewichtsteilen vorgelegt. Dann wird die Temperatur unter Rühren auf 80 °C gebracht und innerhalb einer Stunde eine Lösung des Initiators zudosiert. Im Anschluss wird noch für 2 Stunden bei dieser Temperatur weitergerührt, dann das Lösemittel im Vakuum entfernt.

### Synthesevorschrift 2:

### Allgemeine Synthesevorschrift zur Umsetzung der nach Synthesevorschrift 1 erhaltenen Polymere zu anionischen Copolymeren mit Ethersulfat-Gruppen an den Seitenketten:

Das Copolymer wird unter Stickstoff in einem Kolben mit Amidosulfonsäure und Harnstoff vorgelegt. Dann wird unter Rühren für 4 Stunden auf 100 °C erwärmt. Anschließend wird mit 50 gew.-%iger Natronlauge der pH-Wert auf 6,5 bis 7,5 eingestellt. Über NMR-Spektroskopie kann ein Umsetzungsgrad von > 95 % zum entsprechenden Schwefelsäureester-Ammoniumsalz ermittelt werden.

### Synthesevorschrift 3:

### Allgemeine Synthesevorschrift zur Umsetzung der nach Synthesevorschrift 1 erhaltenen Polymere zu anionischen Copolymeren mit Sulfosuccinat-Gruppen an den Seitenketten:

Das Copolymer wird unter Stickstoff in einem Kolben vorgelegt. Dann wird Maleinsäureanhydrid und Natriumhydroxid zugegeben und unter Rühren auf eine Temperatur von 75 bis 85 °C aufgeheizt. Bei dieser Temperatur wird drei Stunden lang gerührt und anschließend wässrige Natriumsulfitlösung (10 gew.-%ig) zudosiert. Bei 60 bis 70 °C wird bis zur Vollendung der Reaktion gerührt und schließlich der pH-Wert mit 50 gew.-%iger Natronlauge auf pH 7 eingestellt.

Die folgenden zwei Tabellen enthalten zweistufige Synthesebeispiele, bei denen das Polymer zunächst nach Synthesevorschrift 1 und dann das anionische Derivat des Polymers nach Synthesevorschrift 2 oder 3 hergestellt wird.

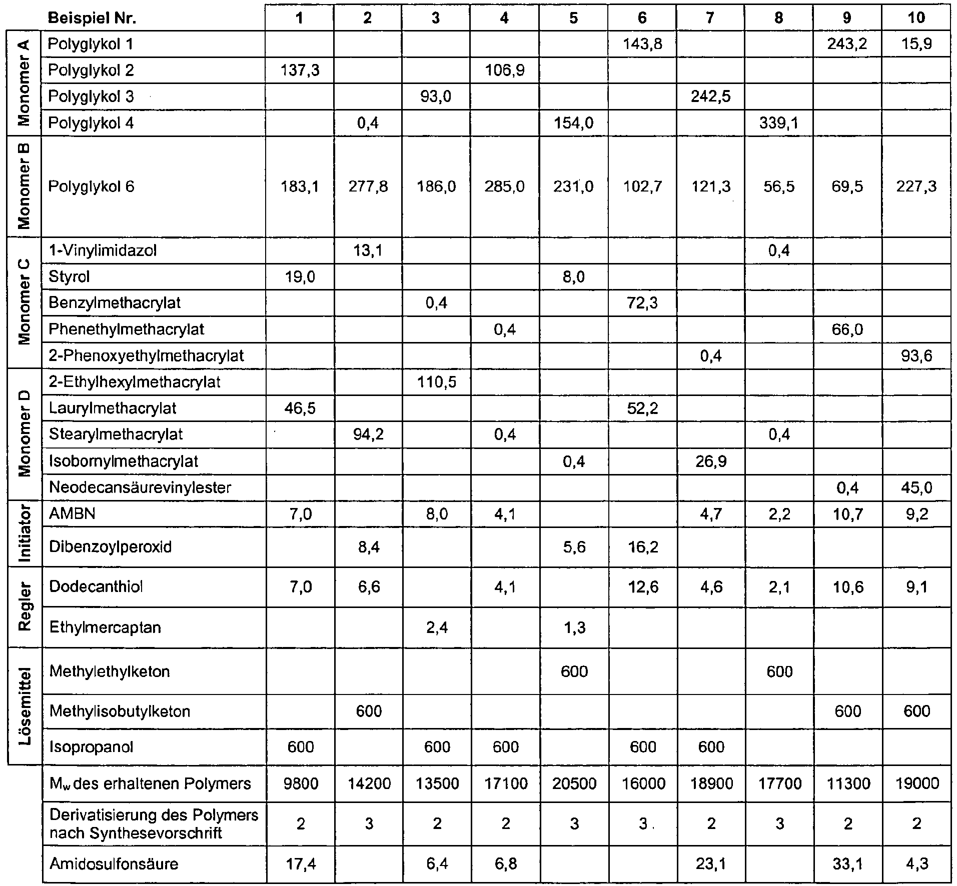

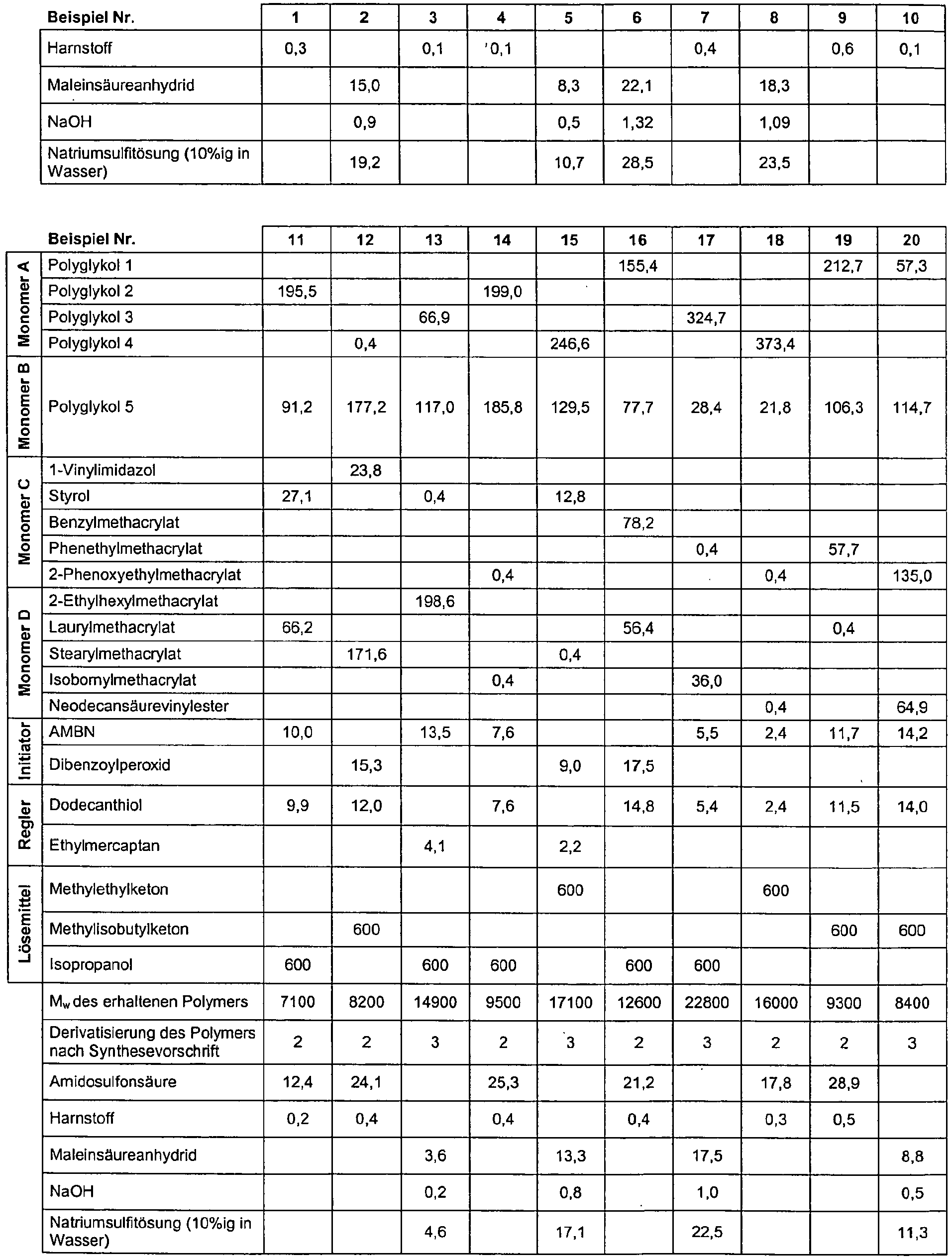

### Zusammensetzung Monomer A:

- Polyglykol 1: Polyalkylenglykolmonomethacrylsäureester (Formel (I), m = 2, n = 3-4; (A-O) entspricht [CH₂CH(CH₃)O)], (B-O) entspricht (CH₂CH₂O)), Molmasse ca. 350 g/mol
- Polyglykol 2: Polyalkylenglykolmonomethacrylsäureester (Formel (I), m = 2, n = 12-13; (A-O) entspricht (CH₂CH(CH₃)O)), (B-O) entspricht (CH₂CH₂O)), Molmasse ca. 750 g/mol
- Polyglykol 3: Polyalkylenglykolmonomethacrylsäureester (Formel (I), m = 2, n = 17-19; (A-O) entspricht (CH₂CH(CH₃)O)), (B-O) entspricht (CH₂CH₂O)), Molmasse ca. 1000 g/mol
- Polyglykol 4: Polyalkylenglykolmonomethacrylsäureester (Formel (I), m = 2, n = 40-42; (A-O) entspricht (CH₂CH(CH₃)O)), (B-O) entspricht (CH₂CH₂O)), Molmasse ca. 2000 g/mol

### Zusammensetzung Monomer B:

- Polyglykol 5: Polypropylenglykolmonomethacrylsäureester (Formel (II), o = 4-5; (D-O) entspricht [CH₂CH(CH₃)O)], Molmasse ca. 350 g/mol
- Polyglykol 6: Polypropylenglykolmonomethacrylsäureester (Formel (II), o = 15-16; (D-O) entspricht [CH₂CH(CH₃)O)], Molmasse ca. 1000 g/mol

### AMBN = 2,2'-Azobis(2-methylbutyronitril)

### Anwendungsbeispiel

### Herstellung einer Pigmentpräparation

Das Pigment wurde, entweder als Pulver, Granulat oder als Presskuchen, zusammen mit dem Dispergiermittel und den anderen Zusätzen in entionisiertem Wasser angeteigt und dann mit einem Dissolver (z. B. von der Firma VMA-Getzmann GmbH, Type AE3-M1) oder einer anderen geeigneten Apparatur homogenisiert und vordispergiert. Die anschließende Feindispergierung erfolgte mit Hilfe einer Perlmühle (z. B. mit AE3-M1 von VMA-Getzmann) oder aber einem anderen geeigneten Dispergieraggregat, wobei die Mahlung mit Siliquarzitperlen oder Zirkonmischoxidperlen der Größe d = 1 mm unter Kühlung bis zur gewünschten Farbstärke und Coloristik erfolgte. Im Anschluss wurden die Mahlkörper abgetrennt, die Pigmentpräparation isoliert und mit entionisiertem Wasser auf eine Konzentration von ca. 20 % eingestellt und mit Hilfe eines Sprühtrockners der Firma Büchi (Büchi 190) getrocknet. Es wurde ein trockenes Pulver erhalten.

### Beurteilung einer Pigmentpräparation

Die Bestimmung der Farbstärke und des Farbtons erfolgte nach DIN 55986. Geprüft wurden die wässrige Pigmentdispersion und das trockene Pulver (Farbstärke und die Verträglichkeiten mit dem einzufärbenden Medium) in einer herkömmlichen wasser-basierten Dispersionsfarbe für Innenanstriche und in einem herkömmlichen lösungsmittelhaltigen Lack. Für den "Rub-Out-Test" wurde die Farbe nach Mischen mit der Pigmentdispersion auf eine Lackkarte aufgetragen. Anschließend wurde mit dem Finger auf dem unteren Teil der Lackkarte nachgerieben. Unverträglichkeit lag vor, wenn die nachgeriebene Fläche dann kräftiger gefärbt ist als die angrenzende, nicht nachbehandelte Fläche (der "Rub-Out-Test" wird in DE 2 638 946 beschrieben).

Die Viskosität wurde mit einem Kegel-Platte-Viskosimeter (Roto Visco 1) der Firma Haake bei 20 °C bestimmt (Titankegel: ∅ 60 mm, 1°), wobei die Abhängigkeit der Viskosität von dem Schergefälle in einem Bereich zwischen 0 und 200 s⁻¹ untersucht wurde. Die Viskositäten wurden bei einem Schergefälle von 60 s⁻¹ gemessen.
Für eine Beurteilung der Lagerstabilität der Dispersionen wurde die Viskosität direkt nach der Herstellung der Präparation gemessen, sowie nach vierwöchiger Lagerung bei 50 °C.

Die in dem folgenden Beispiel beschriebene Pigmentpräparation wurde nach dem zuvor beschriebenen Verfahren hergestellt, wobei die folgenden Bestandteile in den angegebenen Mengen so verwendet wurden, dass 100 Teile der Pigmentpräparation entstehen. In dem nachfolgenden Beispiel bedeuten Teile Gewichtsteile:

| | |
|---|---|
| 35 Teile | C.I. Pigment Schwarz 7 |
| 14 Teile | Polymer aus Synthesebeispiel 19 (Tabelle) |
| 1 Teil | Benetzer |
| 50 Teile | Wasser |

Nach Trocknung hat die Pigmentpräparation folgende Zusammensetzung, hierbei wird ein Restwassergehalt von ca. 1 % vernachlässigt:

| | |
|---|---|
| 70 Teile | C.I. Pigment Schwarz 7 |
| 28 Teile | Polymer aus Synthesebeispiel 19 (Tabelle) |
| 2 Teile | Benetzer |

Die Pigmentpräparation hat in der Weißdispersion und im Lack eine hohe Farbstärke und ist stabil. Der Rub-Out-Test zeigt keine Farbstärkeunterschiede im Vergleich zur nachgeriebenen Fläche. Die Dispersion erweist sich als fließfähig und stabil, da sie nach 28 Tagen Lagerung bei 50 °C ebenfalls noch fließfähig ist. Das trockene Pulver lässt sich spontan in die wasser-basierte Weißdispersion und in den lösungsmittelhaltigen Lack einrühren. Es wird 3 Minuten mit der Hand gerührt. In beiden Farbsystemen wird eine hohe Farbstärke erhalten sowie ein flockulationsstabiler, stippenfreier Auftrag. Der Rub-Out-Test zeigt keine Farbstärkeunterschiede im Vergleich zur nachgeriebenen Fläche.

## Patentansprüche

1. Copolymer **gekennzeichnet durch** die Formeln (V) oder (VI) 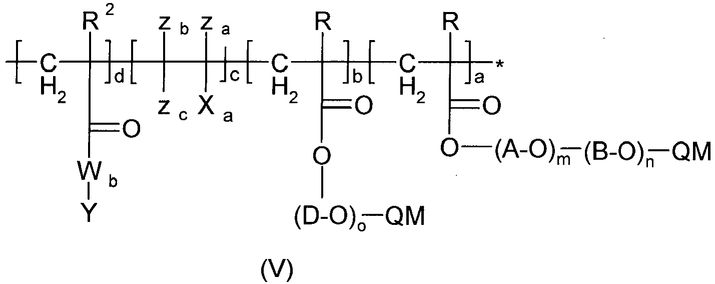 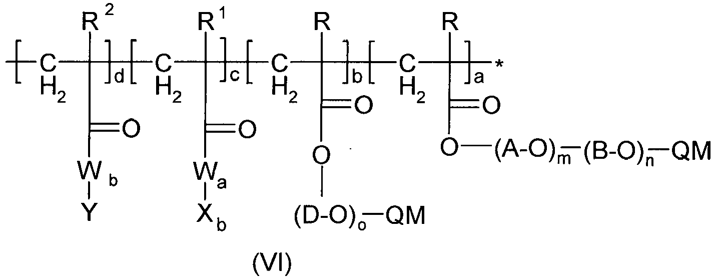 wobei
A für C₂- bis C₄-Alkylen,
B für ein von A unterschiedliches C₂- bis C₄-Alkylen,
D für C₃-Alkylen steht,
m eine Zahl von 1 bis 500 ist;
n eine Zahl von 1 bis 500 ist,
wobei die Summe m + n gleich 2 bis 1000 ist,
o eine Zahl von 2 bis 500 ist;
Xₐ für einen aromatischen oder araliphatischen Rest mit 3 bis 30 C-Atomen steht, der gegebenenfalls Heteroatome aus der Gruppe N, O und S enthält,
Zₐ für H oder (C₁-C₄)-Alkyl steht,
Z_{b} für H oder (C₁-C₄)-Alkyl steht,
Z_{c} für H oder (C₁-C₄)-Alkyl steht,
R für Wasserstoff oder Methyl steht,
R¹ für Wasserstoff oder Methyl steht,
R² für Wasserstoff oder Methyl steht,
Y für einen aliphatischen Kohlenwasserstoffrest mit 1 bis 30 C-Atomen steht, der linear oder verzweigt, oder auch cyclisch sein kann, und Heteroatome aus der Gruppe O, N und S enthalten kann, sowie ungesättigt sein kann,
W_{b} für Sauerstoff oder die Gruppe NH steht;
X_{b} für einen aromatischen oder araliphatischen Rest mit 3 bis 30 C-Atomen steht, der gegebenenfalls Heteroatome aus der Gruppe O, N und S enthält,
Wₐ für Sauerstoff oder die Gruppe NH steht,
Q die Bedeutung SO₃, CH₂COO, PO₃M oder Sulfosuccinat hat, und
M die Bedeutung H, ein Metallkation, ein Ammonium, ein alkyliertes Ammoniumion, oder eine Kombination davon hat;
a = 0,001 - 0,9
b = 0,001 - 0,9
c = 0,001 - 0,9
d = 0,001 - 0,9
wobei die Summe a + b + c + d gleich 1 ist.

2. Copolymer nach Anspruch 1, **dadurch gekennzeichnet, dass** A ein Ethylenrest und B ein Propylenrest, oder A ein Propylenrest und B ein Ethylenrest bedeuten.

3. Copolymer nach einem oder mehreren der Ansprüche 1 bis 2, **dadurch gekennzeichnet, dass** die Alkylenoxideinheiten A-O)ₘ und (B-O)ₙ blockartig angeordnet sind.

4. Verfahren zur Herstellung eines Copolymers nach einem oder mehreren der Ansprüche 1 bis 3, wobei die Monomere (A), (B), (C) und (D) radikalisch polymerisiert und die dabei entstehenden terminalen OH-Gruppen zu anionischen Endgruppen umgesetzt werden, wobei (A) ein Monomer der Formel (I) 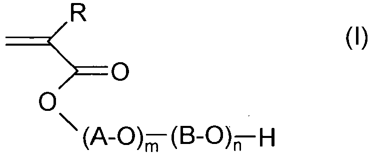 wobei
A für C₂- bis C₄-Alkylen und
B für ein von A unterschiedliches C₂- bis C₄-Alkylen steht,
R für Wasserstoff oder Methyl steht,
m eine Zahl von 1 bis 500, vorzugsweise 1 bis 50, ist;
n eine Zahl von 1 bis 500, vorzugsweise 1 bis 50, ist,
wobei die Summe m + n gleich 2 bis 1000 ist;
Monomer (B) ein Monomer der Formel (II) 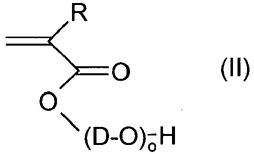 wobei
D für C₃-Alkylen und
R für Wasserstoff oder Methyl steht,
o eine Zahl von 2 bis 500, vorzugsweise 2 bis 100, insbesondere 2 bis 50, besonders bevorzugt 5 bis 25, ist;
Monomer (C) ein Monomer der Formel (IIIa) und (IIIb) 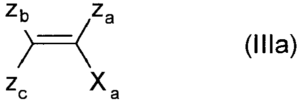 wobei
Xₐ für einen aromatischen oder araliphatischen Rest mit 3 bis 30 C-Atomen steht, der gegebenenfalls eines oder mehrere, z.B. 1, 2 oder 3, der Heteroatome N, O und S enthält,
Zₐ für H oder (C₁-C₄)-Alkyl steht,
Z_{b} für H oder (C₁-C₄)-Alkyl steht, und
Z_{c} für H oder (C₁-C₄)-Alkyl steht; 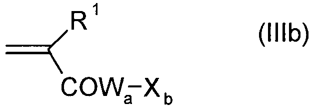
wobei
R¹ für Wasserstoff oder Methyl steht,
X_{b} für einen aromatischen oder araliphatischen Rest mit 3 bis 30 C-Atomen steht, der gegebenenfalls eines oder mehrere, z.B. 1, 2 oder 3, der Heteroatome N, O und S enthält,
Wₐ für Sauerstoff oder die Gruppe NH steht,
Monomer (D) ein Monomer der Formel (IV) 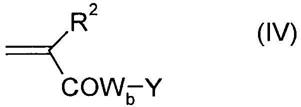 wobei
R² für Wasserstoff oder Methyl steht,
Y für einen aliphatischen Kohlenwasserstoffrest mit 1 bis 30 C-Atomen, vorzugsweise 6 bis 30, insbesondere 9 bis 20 C-Atomen, steht, der linear oder verzweigt, oder auch cyclisch sein kann, und die Heteroatome O, N und/oder S enthalten kann und auch ungesättigt sein kann,
W_{b} für Sauerstoff oder die Gruppe NH steht
bedeuten.

5. Verwendung eines Copolymers nach einem oder mehreren der Ansprüche 1 bis 3 als Dispergiermittel, insbesondere für Pigmente und Füllstoffe.

## Claims

1. A copolymer **characterized by** the formulae (V) or (VI) 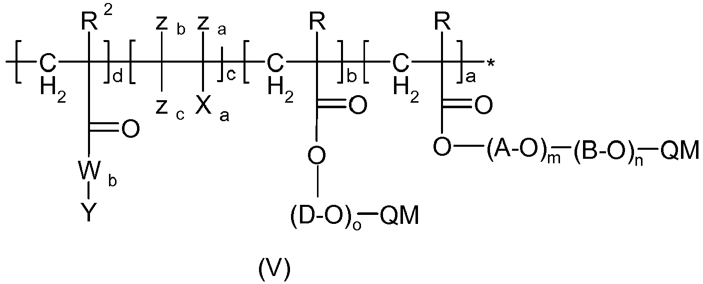 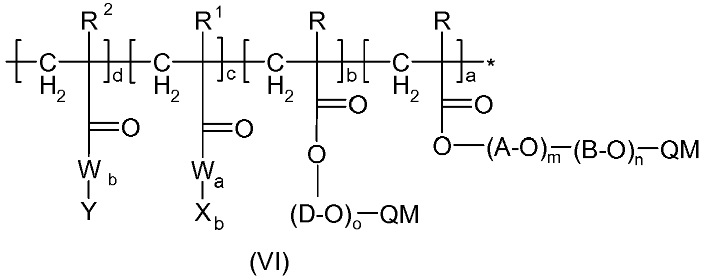 where
A represents C₂-C₄-alkylene,
B represents a C₂-C₄-alkylene other than A,
D represents a C₃-alkylene,
m is from 1 to 500;
n is from 1 to 500;
and the sum total of m + n is from 2 to 1000;
o is from 2 to 500;
Xₐ represents an aromatic or araliphatic radical having 3 to 30 carbon atoms which optionally contains heteroatoms from the group consisting of N, 0 and S,
Zₐ represents H or (C₁-C₄)-alkyl,
Z_{b} represents H or (C₁-C₄)-alkyl,
Z_{c} represents H or (C₁-C₄)-alkyl;
R represents hydrogen or methyl,
R¹ represents hydrogen or methyl,
R² represents hydrogen or methyl,
Y represents an aliphatic hydrocarbon radical having 1 to 30 carbon atoms, which may be linear or branched or else cyclic, and which may contain heteroatoms from the group consisting of 0, N and S and may also be unsaturated,
W_{b} represents oxygen or an NH group;
X_{b} represents an aromatic or araliphatic radical having 3 to 30 carbon atoms which optionally contains heteroatoms from the group consisting of 0, N and S,
Wₐ represents oxygen or an NH group,
Q represents SO₃, CH₂COO, PO₃M or sulfosuccinate, and
M represents H, a metal cation, an ammonium, an alkylated ammonium ion, or a combination thereof;
a = 0.001 - 0.9
b = 0.001 - 0.9
c = 0.001 - 0.9
d = 0.001 - 0.9
subject to the proviso that the sum total of a + b + c + d is equal to 1.

2. The copolymer as claimed in claim 1, wherein A represents an ethylene radical and B represents a propylene radical, or A represents a propylene radical and B represents an ethylene radical.

3. The copolymer as claimed in one or more of claims 1 to 2, wherein the alkylene oxide units A-O)ₘ and (B-O)ₙ are in a blocklike arrangement.

4. A process for producing a copolymer as claimed in one or more of claims 1 to 3, which comprises free-radically polymerizing the monomers (A), (B), (C) and (D) and converting the resulting terminal OH groups to anionic end groups, wherein (A) is a monomer of formula (I) 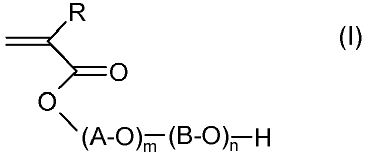 where
A represents C₂-C₄-alkylene,
B represents a C₂-C₄-alkylene other than A,
R represents hydrogen or methyl,
m is from 1 to 500, preferably 1 to 50;
n is from 1 to 500, preferably 1 to 50,
and the sum total of m + n is from 2 to 1000;
monomer (B) is a monomer of formula (II) 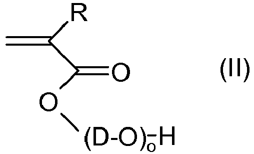 where
D represents C₃-alkylene,
R represents hydrogen or methyl,
o is from 2 to 500, preferably 2 to 100, particularly 2 to 50, particularly preferably 5 to 25;
monomer (C) is a monomer of formula (IIIa) or (IIIb) 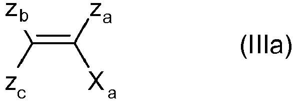 where
Xₐ represents an aromatic or araliphatic radical having 3 to 30 carbon atoms which optionally contains one or more, e.g. 1, 2 or 3, of the heteroatoms N, 0 and S,
Zₐ represents H or (C₁-C₄)-alkyl,
Z_{b} represents H or (C₁-C₄)-alkyl, and
Z_{c} represents H or (C₁-C₄)-alkyl; 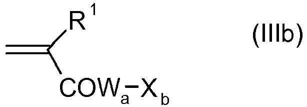
where
R¹ represents hydrogen or methyl,
X_{b} represents an aromatic or araliphatic radical having 3 to 30 carbon atoms which optionally contains one or more, e.g. 1, 2 or 3, of the heteroatoms N, 0 and S,
Wₐ represents oxygen or an NH group,
monomer (D) is a monomer of formula (IV): 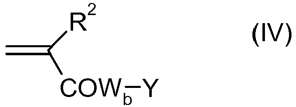 where
R² represents hydrogen or methyl,
Y represents an aliphatic hydrocarbyl radical having 1 to 30 carbon atoms, preferably 6 to 30, particularly 9 to 20 carbon atoms, which may be linear or branched or else cyclic, and which may contain the heteroatoms 0, N and/or S and may also be unsaturated,
W_{b} represents oxygen or an NH group.

5. The use of a copolymer as claimed in one or more of claims 1 to 3 as a dispersant, particularly for pigments and fillers.

## Revendications

1. Copolymère, **caractérisé par** les formules (V) ou (VI) 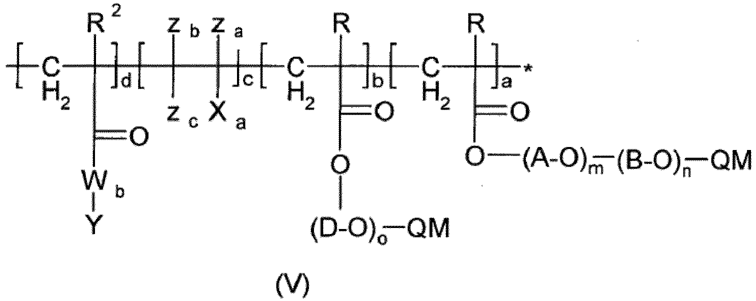 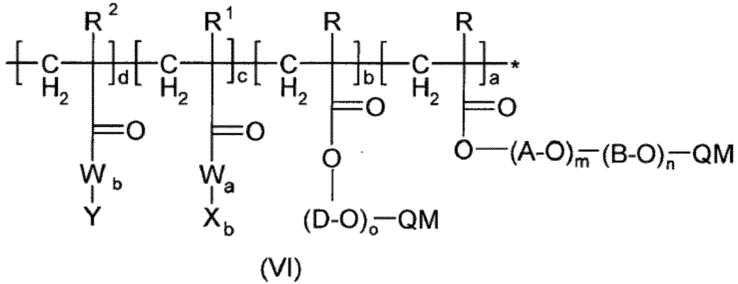 dans lesquelles
A représente alkylène en C₂ à C₄,
B représente un alkylène en C₂ à C₄ différent de A,
D représente alkylène en C₃,
m représente un nombre de 1 à 500 ;
n représente un nombre de 1 à 500,
la somme m + n étant de 2 à 1 000,
o représente un nombre de 2 à 500 ;
Xₐ représente un radical aromatique ou araliphatique de 3 à 30 atomes C, qui contient éventuellement des hétéroatomes du groupe constitué par N, 0 et S,
Zₐ représente H ou alkyle en (C₁-C₄),
Z_{b} représente H ou alkyle en (C₁-C₄),
Z_{c} représente H ou alkyle en (C₁-C₄),
R représente hydrogène ou méthyle,
R¹ représente hydrogène ou méthyle,
R² représente hydrogène ou méthyle,
Y représente un radical hydrocarboné aliphatique de 1 à 30 atomes C, qui peut être linéaire ou ramifié, ou également cyclique, et qui peut contenir des hétéroatomes du groupe constitué par 0, N et S, et qui peut être insaturé,
W_{b} représente oxygène ou le groupe NH ;
X_{b} représente un radical aromatique ou araliphatique de 3 à 30 atomes C, qui contient éventuellement des hétéroatomes du groupe constitué par 0, N et S,
Wₐ représente oxygène ou le groupe NH,
Q signifie SO₃, CH₂COO, PO₃M ou sulfosuccinate, et
M signifie H, un cation métallique, un ammonium, un ion ammonium alkylé ou une combinaison de ceux-ci ;
a = 0,001 à 0,9,
b = 0,001 à 0,9
c = 0,001 à 0,9
d = 0,001 à 0,9
la somme a + b + c + d étant égale à 1.

2. Copolymère selon la revendication 1, **caractérisé en ce qu'**A signifie un radical éthylène et B et un radical propylène, ou A un radical propylène et B un radical éthylène.

3. Copolymère selon une ou plusieurs des revendications 1 à 2, **caractérisé en ce que** les unités oxyde d'alkylène (A-O)ₘ et (B-O)ₙ sont agencées séquentiellement.

4. Procédé de fabrication d'un copolymère selon une ou plusieurs des revendications 1 à 3, selon lequel les monomères (A), (B), (C) et (D) sont polymérisés par voie radicalaire et les groupes OH terminaux ainsi formés sont transformés en groupes terminaux anioniques, (A) étant un monomère de formule (I) 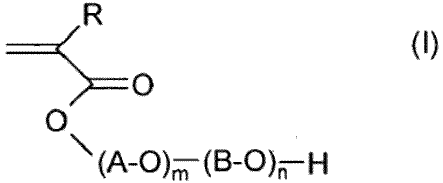 dans laquelle
A représente alkylène en C₂ à C₄, et
B représente un alkylène en C₂ à C₄ différent de A,
R représente hydrogène ou méthyle,
m représente un nombre de 1 à 500, de préférence de 1 à 50 ;
n représente un nombre de 1 à 500, de préférence de 1 à 50 ;
la somme m + n étant de 2 à 1 000 ;
le monomère (B) étant un monomère de formule (II) 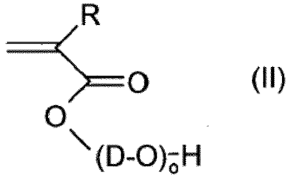 dans laquelle
D représente alkylène en C₃, et
R représente hydrogène ou méthyle,
o représente un nombre de 2 à 500, de préférence de 2 à 100, notamment de 2 à 50, de manière particulièrement préférée de 5 à 25 ;
le monomère (C) étant un monomère de formule (IIIa) et (IIIb) 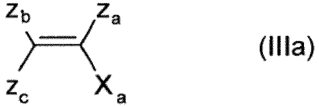 dans laquelle
Xₐ représente un radical aromatique ou araliphatique de 3 à 30 atomes C, qui contient éventuellement un ou plusieurs, p. ex. 1, 2 ou 3, des hétéroatomes N, 0 et S,
Zₐ représente H ou alkyle en (C₁-C₄),
Z_{b} représente H ou alkyle en (C₁-C₄), et
Z_{c} représente H ou alkyle en (C₁-C₄) ; 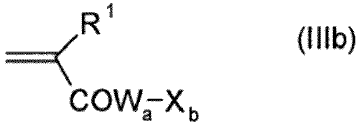 dans laquelle
R¹ représente hydrogène ou méthyle,
X_{b} représente un radical aromatique ou araliphatique de 3 à 30 atomes C, qui contient éventuellement un ou plusieurs, p. ex. 1, 2 ou 3, des hétéroatomes 0, N et S, Wₐ représente oxygène ou le groupe NH,
le monomère (D) étant un monomère de formule (IV) 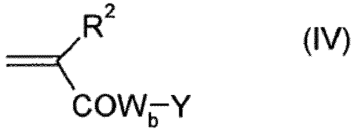 dans laquelle
R² représente hydrogène ou méthyle,
Y représente un radical hydrocarboné aliphatique de 1 à 30 atomes C, de préférence de 6 à 30, notamment de 9 à 20 atomes C, qui peut être linéaire ou ramifié, ou également cyclique, et qui peut contenir les hétéroatomes 0, N et/ou S, et qui peut également être insaturé,
W_{b} représente oxygène ou le groupe NH.

5. Utilisation d'un copolymère selon une ou plusieurs des revendications 1 à 3 en tant que dispersant, notamment pour pigments et charges.
